# FASCICULE DE BREVET EUROPEEN

(11) **EP 4 108 900 B1**
(45) Date de publication et mention de la délivrance du brevet: **23.08.2023**
(21) Numéro de dépôt: 22180248.1
(22) Date de dépôt: 21.06.2022
(51) Int. Cl.: F02C 7/36, F16H 1/28, F16H 57/08

(54) **PORTE-SATELLITES POUR UN REDUCTEUR DE VITESSE DE TURBOMACHINE D'AERONEF**
SATELLITENTRÄGER FÜR EIN UNTERSETZUNGSGETRIEBE EINES TURBOTRIEBWERKS EINES LUFTFAHRZEUGS
PLANET CARRIER FOR A SPEED REDUCER OF AN AIRCRAFT TURBINE ENGINE

(30) Priorité: 24.06.2021 FR 2106768
(43) Date de publication de la demande: 28.12.2022
(73) Titulaire: Safran Transmission Systems, 92700 Colombes (FR)
(72) Inventeur: MOULY, Guillaume Pierre, 77550 MOISSY-CRAMAYEL (FR)
(74) Mandataire: Gevers & Orès

(56) Documents cités:
- DE-A1-102019 127 546
- FR-A- 1 379 451
- US-A- 5 466 198

## Description

### Domaine technique de l'invention

La présente invention concerne un porte-satellites pour un réducteur de vitesse de turbomachine d'aéronef, ainsi qu'un réducteur de vitesse pour une turbomachine d'aéronef.

### Aval-plan technique

L'état de l'art comprend notamment les documents FR-A1-2 987 416, FR-A1-2 853 382, FR-A1-3 041 054, FR-A1-3 052 113, FR-A1-3 073 915, FR-A1-3 084 428, US-5.466.198-A et FR-1.379.451-A.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal de la turbomachine. Les satellites ont chacun un axe de révolution différents équirépartis sur le même diamètre de fonctionnement autour de l'axe des planétaires. Ces axes sont parallèles à l'axe longitudinal de la turbomachine. Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le même sens que le solaire.
- sur un réducteur différentiel, aucun élément n'est fixé en rotation. La couronne tourne dans le sens contraire du solaire et du porte-satellites. Les réducteurs peuvent être composés d'un ou plusieurs étages d'engrènement. Cet engrènement est assuré de différentes façons comme par contact, par friction ou encore par champ magnétique. Il existe plusieurs types d'engrènement par contact comme avec des dentures droites ou en chevron.

Le porte-satellites peut être monobloc ou se présenter sous la forme d'une cage et d'un porte-cage. La cage comprend une cavité interne dans laquelle sont logés le solaire, les satellites et les paliers de guidage de ces satellites. Le solaire comprend des cannelures internes d'accouplement à un premier arbre de la turbomachine et le porte-cage comprend une portion cylindrique comportant des cannelures externes d'accouplement à un autre arbre.

La liaison de la cage au porte-cage est en général rigide. En variante, on peut envisager une technologie dans laquelle la cage est reliée au porte-cage par des liaisons « souples », telles que décrites dans le document FR-A1-2 853 382. Dans un tel cas, le porte-cage comprend une rangée annulaire de doigts axiaux qui portent des premiers éléments de liaison. Ces premiers éléments de liaison coopèrent avec des seconds éléments de liaison montés dans des logements de la cage pour former les liaisons souples entre le porte-cage et la cage, qui autorisent au moins un degré de liberté.

On a proposé de réaliser ces liaisons souples par des rotules, les doigts portant des rotules traversées par des broches cylindriques s'étendant dans les logements de la cage.

En fonctionnement, lors de la mise sous couple du porte-satellites, les doigts vont fléchir et transmettre le couple à la cage. Les rotules permettent de ne pas transmettre le fléchissement des doigts aux broches. Le porte-cage maintient la cage dans son plan de symétrie afin d'équilibrer la récupération des efforts de part et d'autre des satellites.

Le montage des satellites dans la cage n'est parfois pas réalisable ni par l'intérieur ni par l'extérieur de la cage, imposant alors de découper la cage en plusieurs pièces afin de monter les satellites avant de refermer l'ensemble des pièces de la cage.

Une solution à ce problème pourrait consister à dissocier un des côtés de la cage du reste de la cage et à prévoir des brides annulaires de fixation respectivement sur le côté et le reste de la cage. Cependant, ces brides et les moyens de fixation (vis) de ces brides devraient être dimensionnés pour supporter au moins 50% de la charge du réducteur, ce qui se traduirait par des brides encombrantes et lourdes et des moyens de fixation de ces brides contraints en fonctionnement.

La présente invention propose un perfectionnement qui apporte une solution simple, efficace et économique à au moins une partie des problèmes évoqués ci-dessus.

### Résumé de l'invention

L'invention concerne un porte-satellites pour un réducteur de vitesse de turbomachine, ce porte-satellites ayant un axe X principal et comportant :
- un porte-cage comportant une rangée annulaire de doigt axiaux autour de l'axe X, qui portent des premiers éléments de liaison, et
- une cage comportant une cavité interne configurée pour contenir un solaire central d'axe X de rotation et une rangée annulaire de satellites disposés autour de l'axe X et engrenés avec ledit solaire ainsi qu'avec une couronne destinée à entourer la cage, la cage comportant à sa périphérie des logements et des seconds éléments de liaison qui sont montés dans lesdits logements et qui coopèrent avec les premiers éléments de liaison pour former des liaisons entre le porte-cage et la cage, qui autorisent au moins un degré de liberté,

la cage comprenant deux coquilles qui sont fixées axialement l'une à l'autre et séparées l'une de l'autre par un plan, lesdits logements étant formés respectivement dans lesdites coquilles,
chacun desdits logements comprenant un premier orifice formé dans une première des coquilles et un second orifice formé dans une seconde des coquilles, les premier et second orifices étant alignés,
caractérisé en ce que les coquilles comprennent des pattes radiales en appui axial les unes contre les autres ou à distance axiale les unes des autres et dans lesquelles sont formés respectivement lesdits premier et second orifices ;

La présente invention propose ainsi de former les logements de montage des seconds éléments de liaison dans les deux coquilles de la cage. Contrairement à la solution évoquée dans ce qui précède consistant à dissocier un des côtés de la cage du reste de la cage et dans laquelle les logements seraient formés uniquement dans le reste de la cage, les logements sont ici formés dans les deux coquilles de la cage, ce qui permet à ces coquilles de reprendre chacune une partie des efforts qui transitent entre la cage et le porte-cage en fonctionnement. Les deux coquilles supportent donc les seconds éléments de liaison.

La présente invention est compatible
- d'un réducteur à simple étage ou à plusieurs étages ;
- d'un réducteur planétaire, épicycloïdal ou différentiel ; et
- de dentures droites, hélicoïdales ou en chevron.

Le porte-satellites selon l'invention peut comprendre une ou plusieurs des caractéristiques suivantes, prises isolément les unes des autres, ou en combinaison les unes avec les autres :
-- ledit plan est sensiblement perpendiculaire audit axe X ;
-- lesdits logements sont orientés parallèlement audit axe X ;
-- chacune des coquilles définit une partie axiale de ladite cavité et est destinée à recevoir une partie axiale de chacun des satellites ;

- ledit plan est un plan de liaison ou d'appui axial des coquilles ;
- les coquilles sont identiques et ledit plan est également un plan de symétrie ;
- les coquilles comprennent des pattes radiales en appui axial les unes contre les autres et les pattes sont serrées axialement entre elles par des vis qui s'étendent parallèlement audit axe et traversent des passages de ces pattes ;
- les liaisons entre le porte-cage et la cage sont du type à rotule, lesdits doigts portant des rotules qui sont logées dans des bagues montées dans lesdits premier et second orifices ;
- un premier écrou est vissé à une extrémité axiale de chacun desdits doigts et assure la fixation de la rotule portée par ce doigt, et un second écrou est vissé sur une extrémité libre de la bague de montage de cette rotule et assure la fixation de cette bague sur les coquilles ;
- les coquilles comprennent des pattes radiales à distance axiale les unes des autres et les liaisons entre le porte-cage et la cage sont du type à rotule, lesdits doigts portant des bagues dans lesquelles sont logées des rotules portées par des inserts montés dans lesdits premier et second orifices ;
- les liaisons entre le porte-cage et la cage sont du type à rotule, lesdits doigts portant des rotules qui sont logées dans des bagues portées par des inserts montés dans lesdits premier et second orifices ;
- lesdits inserts sont frettés dans lesdits premier et second orifices ;
- chacune desdites rotules présentent un axe Y principal orienté axialement ou radialement.

La présente invention concerne également un réducteur mécanique pour une turbomachine d'aéronef, comportant un porte-satellites tel que décrit ci-dessus, un solaire monté dans ladite cavité et centré sur ledit axe X, une couronne s'étendant autour du solaire, et des satellites montés dans ladite cavité et engrenés avec le solaire et la couronne.

L'invention concerne en outre une turbomachine, en particulier d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :

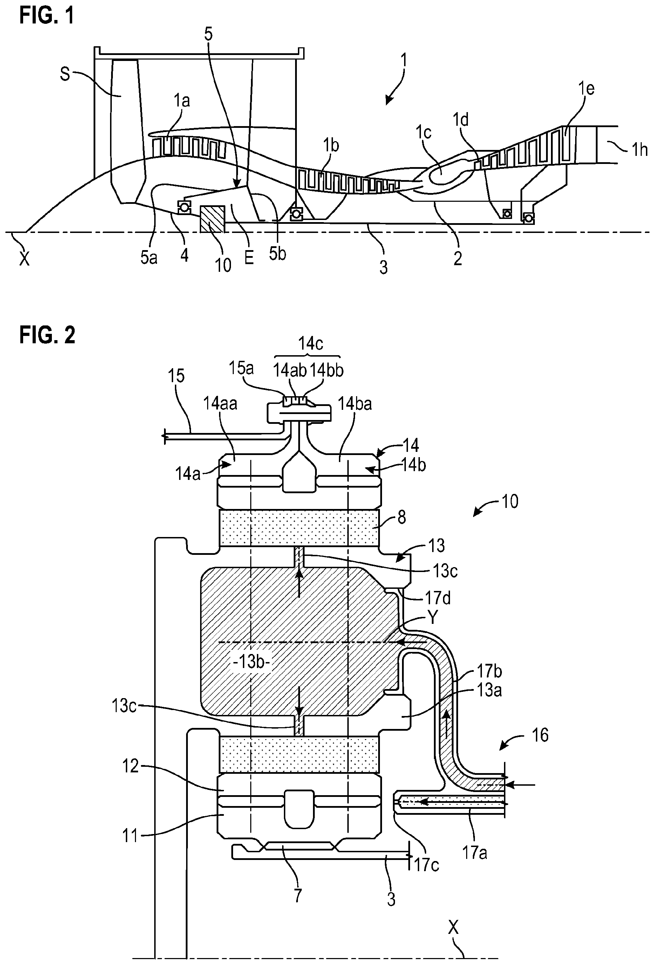

[Fig. 1] la figure 1 est une vue schématique en coupe axiale d'une turbomachine utilisant l'invention ;
[Fig. 1] la figure 1 est une vue schématique en coupe axiale d'un réducteur à train épicycloïdal ;
[Fig. 3] la figure 3 est une vue en perspective d'un ensemble cage et porte-cage formant un porte-satellites de réducteur ;
[Fig. 4] la figure 4 est une vue en coupe axiale et partielle d'une partie du porte-satellites de la figure 3 ;
[Fig. 5] la figure 5 est une vue de détail de la figure 4 ;
[Fig. 6] la figure 6 est une vue schématique en perspective d'une cage d'un porte-satellites de réducteur selon l'invention ;
[Fig. 7] la figure 7 est une vue schématique en perspective d'une partie de la cage de la figure 6, dans un logement duquel sont montés des éléments de liaison de cette cage à un porte-cage ;
[Fig. 8] la figure 8 est une vue schématique en coupe selon la ligne VIII-VIII de la figure 7 ;
[Fig. 9] la figure 9 est une vue schématique en coupe similaire à celle de la figure 8 et représentant une variante de réalisation de l'invention ; et
[Fig. 10] la figure 10 est une vue schématique en coupe similaire à celle de la figure 8 et représentant une autre variante de réalisation de l'invention.

### Description détaillée de l'invention

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est relié à l'arbre BP 3 au moyen d'un réducteur 10. Ce réducteur est généralement de type planétaire ou épicycloïdal.

Bien que la description qui suit concerne un réducteur du type planétaire ou épicycloïdal, elle s'applique également à un différentiel mécanique dans lequel ses trois composants essentiels, que sont le porte-satellites, la couronne et le solaire, sont mobiles en rotation, la vitesse de rotation de l'un de ces composants dépendant notamment de la différence de vitesses des deux autres composants.

Le réducteur 10 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 10. Cette enceinte E est ici fermée en amont par des joints au niveau d'un palier permettant la traversée de l'arbre de soufflante 4, et en aval par des joints au niveau de la traversée de l'arbre BP 3.

La figure 1 montre une partie d'un réducteur 10 qui peut prendre la forme de différentes architectures selon si certaines pièces sont fixes ou en rotation. En entrée, le réducteur 10 est relié à l'arbre BP 3, par exemple par l'intermédiaire de cannelures 7. Ainsi, l'arbre BP 3 entraîne un pignon planétaire appelé le solaire 11. Classiquement, le solaire 11 dont l'axe de rotation est confondu avec l'axe X de la turbomachine 1, entraîne une série de pignons appelés satellites 12, qui sont équirépartis sur le même diamètre autour de l'axe de rotation X. Ce diamètre est égal au double de l'entraxe de fonctionnement entre solaire 11 et satellites 12. Le nombre de satellites 12 est généralement défini entre trois et sept pour ce type d'application.

L'ensemble des satellites 12 est maintenus par un châssis appelé porte-satellites 12. Chaque satellite 12 tourne autour de son propre axe Y, et engrène avec la couronne 14.

En sortie du réducteur 10, nous avons :
∘ Dans une configuration épicycloïdale, l'ensemble des satellites 12 entraine en rotation le porte-satellite 13 autour de l'axe X de la turbomachine. La couronne 14 est fixée au carter moteur ou stator 5 via un porte-couronne 15 et le porte-satellites 12 est fixé à l'arbre de soufflante 4.
∘ Dans une configuration planétaire, l'ensemble des satellites 12 est maintenu par un porte-satellites 12 qui est fixé au carter moteur ou stator 5. Chaque satellite entraine la couronne qui est rapportée à l'arbre de soufflante 4 via un porte-couronne 15.

Chaque satellite 12 est monté libre en rotation à l'aide d'un palier 8, par exemple de type roulement ou palier hydrostatique. Chaque palier 8 est monté sur un des axes 13a du porte-satellites 12 et tous les axes sont positionnés les uns par rapport aux autres à l'aide d'un ou plusieurs châssis structurels du porte-satellites 12. Il existe un nombre d'axes et de paliers égal au nombre de satellites. Pour des raisons de fonctionnement, de montage, de fabrication, de contrôle, de réparation ou de rechange les axes 13a et le châssis peuvent être séparés en plusieurs pièces.

Pour les mêmes raisons citées précédemment, la denture d'un réducteur peut être séparée en plusieurs hélices. Dans notre exemple nous détaillons le fonctionnement d'un réducteur 10 à plusieurs hélices avec une couronne séparée en deux demi-couronnes:
∘ Une demi-couronne avant 14a constituée d'une jante 14aa et d'une demi-bride de fixation 14ab. Sur la jante 14aa se trouve l'hélice avant de la denture du réducteur. Cette hélice avant engrène avec celle du satellite 12 qui engrène avec celle du solaire 11.
∘ Une demi-couronne arrière 14b constituée d'une jante 14ba et d'une demi-bride de fixation 14bb. Sur la jante 14ba se trouve l'hélice arrière de la denture du réducteur. Cette hélice arrière engrène avec celle du satellite 12 qui engrène avec celle du solaire 11.

La demi-bride de fixation 14ab de la couronne avant 14a et la demi-bride de fixation 14bb de la couronne arrière 14b forment la bride de fixation 14c de la couronne. La couronne 14 est fixée au porte-couronne 15 en assemblant la bride de fixation 14c de la couronne et la bride de fixation 15a du porte-couronne à l'aide d'un montage boulonné par exemple. Dans ce qui suit, une demi-bride pourra être appelée une bride.

Les flèches de la figure 1 décrivent l'acheminement d'huile dans le réducteur 10. L'huile arrive dans le réducteur 10 depuis la partie stator 5 dans le distributeur 16 par différents moyens qui ne seront pas précisés dans cette vue car ils sont spécifiques à un ou plusieurs types d'architecture. Le distributeur 16 est séparé en deux parties en général chacune répétée du même nombre de satellites. Les injecteurs 17a ont pour fonction de lubrifier les dentures, et les bras 17b ont pour fonction de lubrifier les paliers 8. L'huile est amenée vers l'injecteur 17a pour ressortir par l'extrémité 17c afin de lubrifier les dentures. L'huile est également amenée vers chaque bras 17b et circule via la bouche d'alimentation 17d du palier 8. L'huile circule ensuite à travers l'axe 13a dans une ou des zones tampons 13b pour ensuite ressortir par des orifices 13c afin de lubrifier les paliers 8 des satellites.

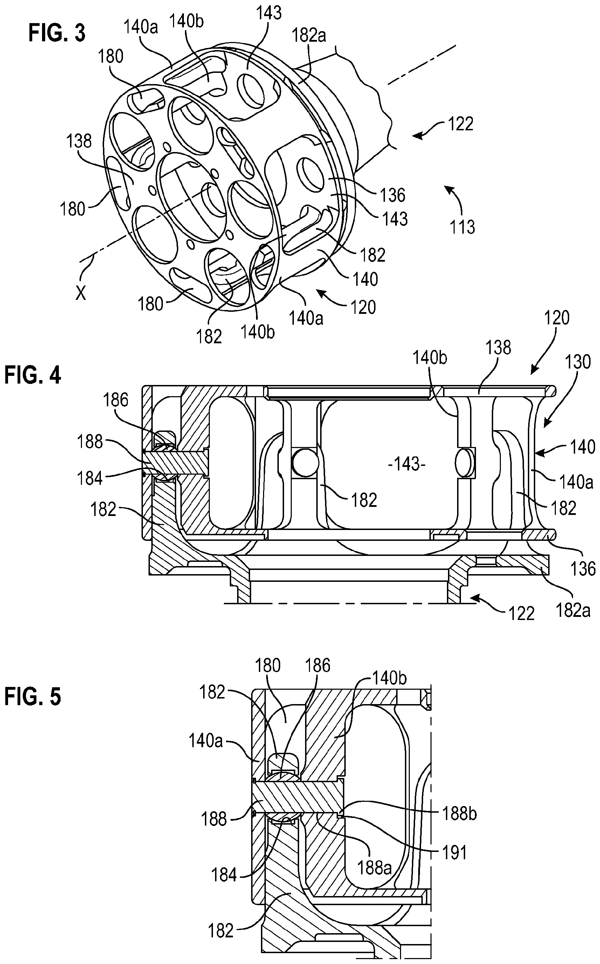

Dans les figures 3 à 5, les éléments déjà décrits dans ce qui précède sont désignés par les mêmes références augmentés d'une centaine.

Les figures 3 à 5 représentent une technologie particulière de porte-satellites 113, ce porte-satellites comportant une cage 120 et un porte-cage 122 reliés par des liaisons à rotules.

La cage 120 comprend deux parois annulaires radiales 136, 138 qui sont parallèles entre elles et perpendiculaires à l'axe X, ainsi qu'une paroi cylindrique 140 qui s'étend entre les périphéries externes de ces parois 136, 138.

La paroi cylindrique 140 est ici du type à double peau et comprend une peau externe 140a interrompue par les lumières 143 et une peau interne 140b interrompue par les mêmes lumières 143. La peau externe 140a séparée par cinq lumières 143 forme cinq pontets extérieurs et la peau interne 140b séparée par cinq lumières 143 forme cinq pontets intérieurs. Chaque couple de pontets inférieur et supérieur forment une chape pour accueillir le doigt 182 du porte-cage 122. Autrement dit, les pontets de chaque couple définissent entre eux un logement 180 de réception d'un doigt 182 du porte-cage 122. Les pontets assurent la liaison structurelle entre les parois 136 et 138. Des lumières 180 de forme oblongue sont réalisées dans au moins une des parois 136 et 138 de telle sorte à laisser passer le doigt 182 entre les pontets intérieur et extérieur.

La cage 120 comprend ainsi une rangée annulaire de logements 180. Ces logements 180 reçoivent les doigts axiaux 182 solidaires d'une paroi annulaire 182a sensiblement radiale du porte-cage 122. La paroi 182a est située à une extrémité axiale du porte-cage 122. Les doigts 182 s'étendent axialement depuis la paroi 182a et sont engagés par translation axiale dans les logements 180.

Chaque doigt 182 comprend, sensiblement en son milieu, une bague 184 de montage de la rotule 186 destinée à être traversé par une broche cylindrique 188 portée par la cage 120.

La bague 184 a une orientation sensiblement radiale par rapport à l'axe X. Elle a une forme générale cylindrique. La cage 120 et la rotule 186 ont une épaisseur, mesurée dans une direction radiale par rapport à l'axe X, qui est inférieure à la distance inter-pontets ou l'épaisseur radiale de la lumière oblongue 180, de façon à pouvoir être engagées dans ce logement concomitamment avec le doigt 182 de support de ces pièces.

Chaque logement 180 est traversé par une broche 188 qui a une orientation sensiblement radiale par rapport à l'axe X. Chaque broche 188 comporte un corps cylindrique 188a relié à une extrémité axiale, ici radialement interne, à une collerette annulaire externe 188b. La broche 188 est ici engagée par translation radiale depuis l'intérieur à travers des orifices radiaux des pontets, sa collerette 188b étant destinée à venir en appui radial sur une face plane 191 du pontet extérieur de la cage 120. Après insertion de la broche 188 dans les orifices des pontets, jusqu'à mise en appui de la collerette 188b sur le pontet extérieur, la collerette 188b est fixée à ce pontet par exemple par vissage.

Comme on le voit aux figures 3 à 5, la cage 120 est formée d'une seule pièce et les logements 180 de réception des doigts 182 et de montage des éléments de liaison (rotules 186 et broches 188) entre la cage 120 et le porte-cage 122 sont formés dans la cage 120.

L'invention propose un perfectionnement à cette technologie dans lequel la cage du porte-satellites est réalisée au contraire en deux parties, à savoir deux coquilles, et dans lequel les logements de réception des éléments de liaison entre la cage et le porte-cage sont formés dans ces deux coquilles.

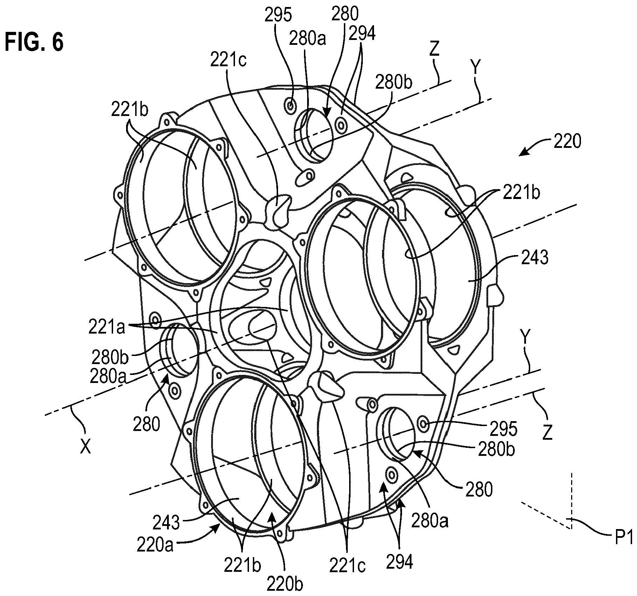

Les figures 6 à 8 représentent un premier mode de réalisation de l'invention. Dans ces figures et les suivantes, les éléments déjà décrits dans ce qui précède sont désignés par les mêmes références augmentées d'au moins une centaine.

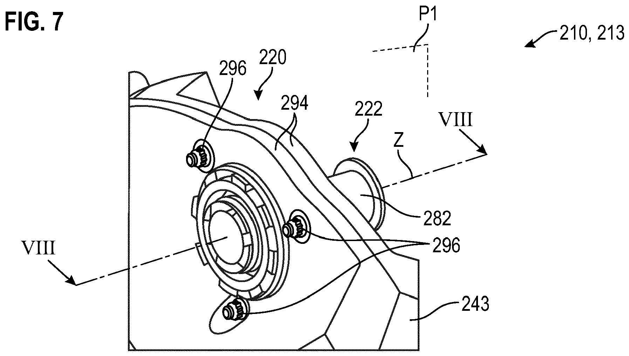

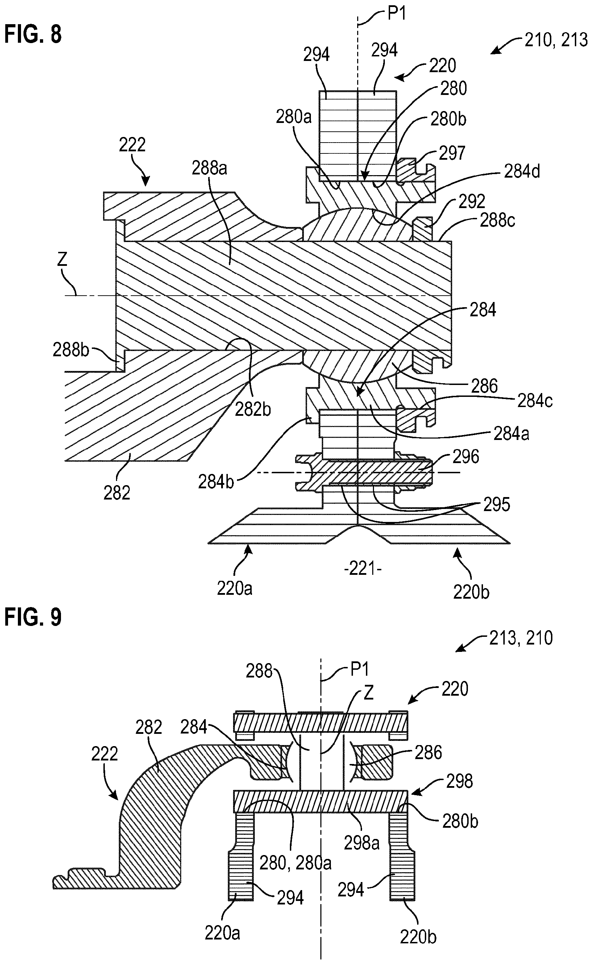

La figure 6 montre la cage 220 seule avec ses deux coquilles 220a, 220b. La figure 7 montre une partie de cette cage 220 équipée des éléments de liaison de la cage 220 au porte-cage 222 et montre un des doigts 282 de cette porte-cage 222. La figure 8 montre une vue en coupe de ces éléments de liaison.

Le porte-cage 222 du réducteur 210 selon l'invention est similaire à celui décrit dans ce qui précède en référence aux figures 3 à 5 et s'en distingue uniquement par ses doigts 282.

De manière générale, le nombre de doigts 282 du porte-cage 222 peut être identique au nombre de satellites 12 du réducteur et est par exemple de trois dans l'exemple représenté. Les doigts 282 sont régulièrement répartis autour de l'axe X principal du réducteur 210 et du porte-satellites 213.

Dans le mode de réalisation des figures 6 à 8, chaque doigt 282 porte une broche 288 dont l'axe Z est parallèle à l'axe X.

Chaque broche 188 comporte un corps cylindrique 288a relié à une extrémité axiale, située ici du côté du porte-cage 222 (à gauche sur la figure 8), à une collerette annulaire externe 288b. La broche 288 est ici engagée par translation axiale à travers un orifice axial 282b du doigt 282 et sa collerette 288b est destinée à venir en appui axial sur une face du doigt 282 sur laquelle débouche l'orifice 282b. Une rotule 286 est montée sur le corps 288a de la broche 288 qui comprend à son extrémité axiale opposée à la collerette 288b un filetage 288c de vissage d'un écrou 292. L'écrou 292 est vissé sur la broche 288 et assure la fixation et le serrage de la rotule 286 contre le doigt 282. Ce serrage a lieu parallèlement à l'axe Z.

Les coquilles 220a, 220b de la cage 220 visible à la figure 6 sont identiques, c'est-à-dire qu'elles peuvent être utilisées chacune indifféremment à l'amont ou à l'aval du réducteur 210.

La cage 220 comporte une cavité interne 221 configurée pour contenir le solaire 11 et les satellites 12 disposés autour du solaire 11 et engrenés avec le solaire 11 ainsi qu'avec la couronne 14 destinée à entourer la cage 220 (cf. figure 2).

Une partie ou moitié axiale de la cavité 221 est définie par une des coquilles 220a et l'autre partie ou moitié axiale de la cavité 221 est définie par l'autre coquille 220b.

Chacune des coquilles 220a, 220b comprend un orifice central 221a d'axe X qui sert au montage de l'arbre 3 destiné à être accouplé avec le solaire 11. Chacune des coquilles 220a, 220b comprend également des orifices 221b de montage des satellites 12 et en particulier des axes 13a ou des paliers 8 des satellites 12, au nombre de trois comme évoqué ci-dessus. Au niveau de ces orifices 221b, la cavité interne 221 débouche radialement vers l'extérieur pour former les lumières 243 précitées et permettre l'engrènement des satellites 12 avec la couronne 14.

Chacune des coquilles 220a, 220b comprend également des orifices 221c de montage de gicleurs d'huile (non représentés).

Chacune des coquilles 220a, 220b comprend également les logements 280 précités de montage des éléments de liaison avec le porte-cage 222. Ces logements 280 sont orientés parallèlement à l'axe X. Chaque logement 280 comprend un premier orifice 280a formé dans une première des coquilles 220a et un second orifice 280b formé dans une seconde des coquilles 220b. Les orifices 280a, 280b sont alignés suivant l'axe Z parallèle à l'axe X.

Les deux coquilles 220a, 220b sont fixées axialement l'une à l'autre et séparées l'une de l'autre par un plan P1 sensiblement perpendiculaire à l'axe X.

Dans l'exemple représenté, le plan P1 est un plan de liaison ou d'appui axial des coquilles 220a, 220b, voire un plan de symétrie du fait que les coquilles 220a, 220b sont identiques.

Cette symétrie est bénéfique pour assurer une déformation symétrique de la cage 220 sous charge et ainsi garder un alignement parfait des dentures du solaire 11 et des satellites 12.

De plus, les orifices 221b d'accueil des paliers 8 des satellites 12 et les logements 280 de montage des éléments de liaison sont tous colinéaires. Ce dernier point est important pour faciliter l'usinage de la cage 220 avec une grande précision de positionnement.

Les coquilles 220a, 220b comprennent à leur périphérie externe des pattes 294 qui sont en appui axial les unes contre les autres et qui sont destinées à former ou remplacer les pontets 140 évoqués dans ce qui précède. Chaque coquille 220a, 220b comprend trois pattes 294 qui sont régulièrement réparties autour de l'axe X et situées entre les orifices 221b de montage des satellites 12, et par exemple situées juste radialement à l'extérieur des orifices 221c de montage des gicleurs.

Les logements 280 et les orifices 280a, 280b sont formés dans ces pattes 294 et les traversent axialement. Ces pattes 294 comportent en outre des passages 295 de montage de moyens de fixation des coquilles 220a, 220b entre elles. Ces moyens de fixation sont des boulons 296 dans l'exemple représenté.

Chacune des pattes 294 comprend trois passages 295 orientés parallèlement à l'axe X. Ces passages 295 sont régulièrement répartis autour de l'axe Z du logement 280 et des orifices 280a, 280b. Chaque boulon 296 comprend une vis dont une tête prend appui axialement sur une face d'une des pattes 294 de la première coquille 220a, et dont une tige filetée reçoit un écrou serré contre une face d'une des pattes 294 de la seconde coquille 220b (figures 7 et 8). Les boulons 296 permettent de reprendre les déformations subies par les coquilles 220a, 220b en fonctionnement. Ils maintiennent serrées les coquilles 220a, 220b entre elles et assurent la non-apparition de *fretting.* Ces boulons sont cependant facultatifs.

Les éléments de liaison qui sont montés dans les logements 280 sont des bagues 284 qui sont destinées à recevoir les rotules 286 portées par les doigts 282 du porte-cage 222.

Comme illustré à la figure 8, chacune des bagues 284 est engagée dans les deux orifices 280a, 280b des coquilles 220a, 220b. Chaque bague 284 comprend un corps cylindrique 284 reliée à une extrémité axiale, située ici du côté du porte-cage (à gauche sur la figure 8), à une collerette annulaire externe 284b. La bague 284 est ici engagée par translation axiale à travers les orifices 280a, 280b (et de préférence frettée dans ces orifices) et est destinée à venir en appui axial sur une face d'une des pattes 294 de la première coquille 220a. L'extrémité axiale opposée de la bague 284 comprend un filetage 284c de vissage d'un écrou 297. L'écrou assure la fixation et le serrage de la bague 284 sur les coquilles 220a, 220b. Ce serrage a lieu parallèlement à l'axe X.

La bague 284 comprend un évidement interne 284d en portion de sphère qui est conformé pour recevoir et coopérer par rotulage avec la rotule 286 et autoriser ainsi une certaine souplesse et en particulier plusieurs degrés de liberté dans la liaison entre la cage 220 et le porte-cage 222.

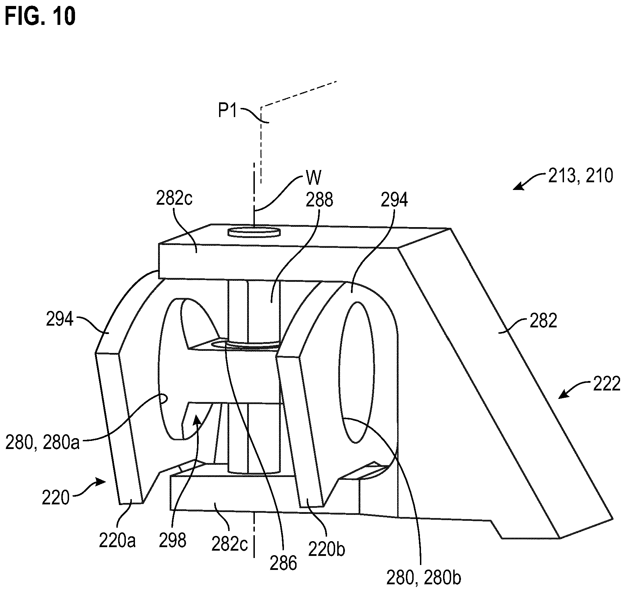

Les figures 9 et 10 illustrent des variantes de réalisation du porte-satellites 213 selon l'invention.

Dans ces deux variantes, le plan P1 qui sépare les deux coquilles 220a, 220b de la cage 220 n'est pas un plan de liaison, même s'il peut être toujours un plan de symétrie. Au contraire, les coquilles 220a, 220b sont à distance axiale de ce plan P1 et donc à distance axiale l'une de l'autre.

Les coquilles 220a, 220b sont partiellement représentées et seules leurs pattes 294 sont visibles dans les dessins. On comprend donc que le reste de la cage 220 est similaire à ce qui est montré dans les figures 6 à 8 et décrit dans ce qui précède.

Dans le cas de la figure 9, les pattes 294 des coquilles 220a, 220b sont à distance axiale l'une de l'autre et s'étendent parallèlement entre elles et perpendiculairement à l'axe X. Les logements 280 et les orifices 280a, 280b reçoivent des inserts 298, de préférence frettés dans ces logements. Chaque insert 298 comprend un corps cylindrique tubulaire 298a et une broche cylindrique 288 qui est situé à l'intérieur et sensiblement au milieu du corps 298a. Le corps 298a s'étend suivant l'axe Z et la broche 288 s'étend suivant un axe radial W. Les extrémités de la broche 288 sont solidaires du corps 298a. Cet insert 298 peut être formé d'une seule pièce.

Les doigts 282 portent chacun une bague 284a qui entoure une rotule 286 dont l'alésage interne est traversé par l'une des broches 288. Les doigts sont pour cela engagés dans les logements 280 ainsi que dans les corps 298a des inserts 298.

Dans le cas de la figure 10, les pattes 294 des coquilles 220a, 220b sont à distance axiale l'une de l'autre et s'étendent parallèlement entre elles et perpendiculairement à l'axe X. Les logements 280 et les orifices 280a, 280b reçoivent des inserts 298, de préférence frettés, qui portent chacun une rotule 286 dont l'alésage interne est orienté radialement par rapport à l'axe X (suivant un axe W).

Les doigts 282 portent des broches 288 qui traversent les alésages des rotules 286. Ces broches 288 sont orientées radialement par rapport à l'axe X et sont ici reliées par leurs deux extrémités opposées au doigt 282 correspondant. Pour cela, chacun des doigts 282 a une extrémité avec une forme en C dont les branches 282c sont reliées aux extrémités de la broche 288 qu'il porte.

Les variantes des figures 9 et 10 permettent de rendre le porte-satellites 213 plus isostatique tout en conservant une potentielle symétrie des coquilles 220a, 220b de la cage 220, et des orifices 280a, 280b et logements 280 colinéaires.

## Revendications

1. Porte-satellites (213) pour un réducteur de vitesse (210) de turbomachine (1), ce porte-satellites (213) ayant un axe X principal et comportant :
- un porte-cage (222) comportant une rangée annulaire de doigt axiaux (282) autour de l'axe X, qui portent des premiers éléments de liaison, et
- une cage (220) comportant une cavité interne (221) configurée pour contenir un solaire central (11) d'axe X de rotation et une rangée annulaire de satellites (12) disposés autour de l'axe X et engrenés avec ledit solaire (11) ainsi qu'avec une couronne (14) destinée à entourer la cage (220), la cage (220) comportant à sa périphérie des logements (280) et des seconds éléments de liaison qui sont montés dans lesdits logements (280) et qui coopèrent avec les premiers éléments de liaison pour former des liaisons entre le porte-cage (222) et la cage (220), qui autorisent au moins un degré de liberté, la cage (220) comprenant deux coquilles (220a, 220b) qui sont fixées axialement l'une à l'autre et séparées l'une de l'autre par un plan (P1), lesdits logements (280) étant formés respectivement dans lesdites coquilles (220a, 220b),
chacun desdits logements (280) comprenant un premier orifice (280a) formé dans une première des coquilles (220a) et un second orifice (280b) formé dans une seconde des coquilles (220b), les premier et second orifices (280a, 280b) étant alignés,
**caractérisé en ce que** les coquilles (220a, 220b) comprennent des pattes radiales (294) en appui axial les unes contre les autres ou à distance axiale les unes des autres et dans lesquelles sont formés respectivement lesdits premier et second orifices (280a, 280b).

2. Porte-satellites (213) selon la revendication 1, dans lequel ledit plan (P1) est un plan de liaison ou d'appui axial des coquilles (220a, 220b).

3. Porte-satellites (213) selon la revendication 1 ou 2, dans lequel les coquilles (220a, 220b) sont identiques et ledit plan (P1) est également un plan de symétrie.

4. Porte-satellites (213) selon l'une des revendications précédentes, dans lequel les pattes (294) sont en appui axial les unes contre les autres et sont serrées axialement entre elles par des vis qui s'étendent parallèlement audit axe X et traversent des passages (295) de ces pattes.

5. Porte-satellites (213) selon la revendication 4, dans lequel les liaisons entre le porte-cage (222) et la cage (220) sont du type à rotule, lesdits doigts (282) portant des rotules (286) qui sont logées dans des bagues (284) montées dans lesdits premier et second orifices (280a, 280b).

6. Porte-satellites (213) selon la revendication 5, dans lequel un premier écrou (292) est vissé à une extrémité axiale de chacun desdits doigts (282) et assure la fixation de la rotule (286) portée par ce doigt (282), et un second écrou (297) est vissé sur une extrémité libre de la bague (284) de montage de cette rotule (286) et assure la fixation de cette bague (284) sur les coquilles (220a, 220b).

7. Porte-satellites (213) selon l'une des revendications 1 à 3, dans lequel les pattes radiales (294) sont à distance axiale les unes des autres et dans lequel les liaisons entre le porte-cage (222) et la cage (220) sont du type à rotule, lesdits doigts (282) portant des bagues (284) dans lesquelles sont logées des rotules (286) portées par des inserts (298) montés dans lesdits premier et second orifices (280a, 280b).

8. Porte-satellites (213) selon la revendication 7, dans lequel les liaisons entre le porte-cage (222) et la cage (220) sont du type à rotule, lesdits doigts (282) portant des rotules (286) qui sont logées dans des bagues (284) portées par des inserts (298) montés dans lesdits premier et second orifices (280a, 280b).

9. Porte-satellites (213) selon la revendication 7 ou 8, dans lequel lesdits inserts (298) sont frettés dans lesdits premier et second orifices (280a, 280b).

10. Porte-satellites (213) selon la revendication 5, 6, 7, 8 ou 9, dans lequel chacune desdites rotules (286) présentent un axe (Z, W) principal orienté axialement parallèlement à l'axe X ou radialement par rapport à l'axe X.

11. Réducteur mécanique (210) pour une turbomachine d'aéronef, comportant un porte-satellites (213) selon l'une des revendications précédentes, un solaire (11) monté dans ladite cavité (221) et centré sur ledit axe X, une couronne (14) s'étendant autour du solaire (221), et des satellites (12) montés dans ladite cavité (221) et engrenés avec le solaire (11) et la couronne (14).

12. Turbomachine (1), en particulier d'aéronef, comportant un réducteur (210) selon la revendication précédente.

## Patentansprüche

1. Planetenträger (213) für ein Untersetzungsgetriebe (210) einer Turbomaschine (1), wobei dieser Planetenträger (213) eine Hauptachse X aufweist und umfasst:
- einen Gehäuseträger (222), umfassend eine ringförmige Anordnung von Axialfinger (282) um die Achse X herum, die die ersten Verbindungselemente tragen, und
- ein Gehäuse (220), umfassend einen internen Hohlraum (221), konfiguriert, um ein zentrales Sonnenrad (11) mit Drehachse X und eine ringförmige Anordnung von um die Achse X herum angeordneten und mit dem Sonnenrad (11) sowie mit einer Krone (14), die dazu bestimmt ist, das Gehäuse (220) zu umgeben, in Eingriff stehenden Planeten (12) zu enthalten, wobei das Gehäuse (220) an seinem Umfang Aufnahmen (280) und zweite Verbindungselemente umfasst, die in den Aufnahmen (280) montiert sind und die mit den ersten Verbindungselementen zusammenwirken, um Verbindungen zwischen dem Gehäuseträger (222) und dem Gehäuse (220) zu bilden, die mindestens einen Freiheitsgrad erlauben, wobei das Gehäuse (220) zwei Mäntel (220a, 220b) umfasst, die axial aneinander befestigt sind und durch eine Ebene (P1) voneinander getrennt sind, wobei die Aufnahmen (280) jeweils in den Mänteln (220a, 220b) gebildet sind,
wobei jede der Aufnahmen (280) eine erste Öffnung (280a), die in einem ersten der Mäntel (220a) gebildet ist, und eine zweite Öffnung (280b) umfasst, die in einem zweiten der Mäntel (220b) gebildet ist, wobei die erste und zweite Öffnung (280a, 280b) ausgerichtet sind,
**dadurch gekennzeichnet, dass** die Mäntel (220a, 220b) radiale Ansätze (294) beinhalten, die axial aneinander anliegen oder in axialem Abstand voneinander vorliegen, und in denen jeweils die erste und zweite Öffnung (280a, 280b) gebildet sind.

2. Planetenträger (213) nach Anspruch 1, wobei die Ebene (P1) eine Verbindungs- oder axiale Anlageebene der Mäntel (220a, 220b) ist.

3. Planetenträger (213) nach Anspruch 1 oder 2, wobei die Mäntel (220a, 220b) identisch sind und die Ebene (P1) darüber hinaus eine Symmetrieebene ist.

4. Planetenträger (213) nach einem der vorstehenden Ansprüche, wobei die Ansätze (294) axial aneinander anliegen und zwischen ihnen durch Schrauben, die sich parallel zu der Achse X erstrecken und die Durchgänge (295) dieser Ansätze durchqueren, axial eingespannt sind.

5. Planetenträger (213) nach Anspruch 4, wobei die Verbindungen zwischen dem Gehäuseträger (222) und dem Gehäuse (220) vom Kugelgelenktyp sind, wobei die Finger (282) Kugelgelenke (286) tragen, die in Muffen (284) aufgenommen sind, die in der ersten und zweiten Öffnung (280a, 280b) montiert sind.

6. Planetenträger (213) nach Anspruch 5, wobei eine erste Schraubenmutter (292) an ein axiales Ende von jedem der Finger (282) geschraubt ist und die Befestigung des von diesem Finger (282) getragenen Kugelgelenks (286) sicherstellt, und eine zweite Schraubenmutter (297) auf ein freies Ende der Montagemuffe (284) dieses Kugelgelenks (286) geschraubt ist und die Befestigung dieser Muffe (284) auf den Mänteln (220a, 220b) sicherstellt.

7. Planetenträger (213) nach einem der Ansprüche 1 bis 3, wobei die radialen Ansätze (294) in axialem Abstand voneinander vorliegen und wobei die Verbindungen zwischen dem Gehäuseträger (222) und dem Gehäuse (220) vom Kugelgelenktyp sind, wobei die Finger (282) Muffen (284) tragen, in denen Kugelgelenke (286) aufgenommen sind, die von Einsätzen (298) getragen werden, die in der ersten und zweiten Öffnung (280a, 280b) montiert sind.

8. Planetenträger (213) nach Anspruch 7, wobei die Verbindungen zwischen dem Gehäuseträger (222) und dem Gehäuse (220) vom Kugelgelenktyp sind, wobei die Finger (282) Kugelgelenke (286) tragen, die in Muffen (284) aufgenommen sind, die von Einsätzen (298) getragen werden, die in der ersten und zweiten Öffnung (280a, 280b) montiert sind.

9. Planetenträger (213) nach Anspruch 7 oder 8, wobei die Einsätze (298) in der ersten und zweiten Öffnung (280a, 280b) aufgeschrumpft sind.

10. Planetenträger (213) nach Anspruch 5, 6, 7, 8 oder 9, wobei jedes der Kugelgelenke (286) eine Hauptachse (Z, W) aufweist, die axial parallel zu der Achse X oder radial bezüglich der Achse X orientiert ist.

11. Mechanisches Getriebe (210) für eine Luftfahrzeug-Turbomaschine, umfassend einen Planetenträger (213) nach einem der vorstehenden Ansprüche, ein in dem Hohlraum (221) montiertes und auf der Achse X zentriertes Sonnenrad (11), eine Krone (14), die sich um das Sonnenrad (221) herum erstreckt, und in dem Hohlraum (221) montierte und mit dem Sonnenrad (11) und der Krone (14) in Eingriff stehende Planeten (12).

12. Turbomaschine (1), insbesondere eines Luftfahrzeugs, umfassend ein Reduktionsgetriebe (210) nach dem vorstehenden Anspruch.

## Claims

1. A planet carrier (213) for a speed reduction gear (210) of a turbomachine (1), this planet carrier (213) having a main axis X and comprising:
- a cage carrier (222) comprising an annular row of axial fingers (282) about the axis X, which carry first connecting elements, and
- a cage (220) comprising an internal cavity (221) configured to contain a central sun gear (11) of axis X of rotation and an annular row of planet gears (12) disposed about the axis X and meshed with said sun gear (11) and with a ring gear (14) for surrounding the cage (220), the cage (220) comprising at its periphery housings (280) and second connecting elements which are mounted in said housings (280) and which cooperate with the first connecting elements to form connections between the cage carrier (222) and the cage (220), which allow at least one degree of freedom, the cage (220) comprising two shells (220a, 220b) which are axially fixed to each other and separated from each other by a plane (P1), said housings (280) being formed respectively in said shells (220a, 220b),
each of said housings (280) comprising a first orifice (280a) formed in a first of the shells (220a) and a second orifice (280b) formed in a second of the shells (220b), the first and second orifices (280a, 280b) being aligned,
**characterised in that** the shells (220a, 220b) comprise radial tabs (294) in axial support against each other or axially spaced from each other and in which said first and second orifices (280a, 280b) are formed respectively.

2. The planet carrier (213) according to claim 1, wherein said plane (P1) is a plane of connection or axial support for the shells (220a, 220b).

3. The planet carrier (213) according to claim 1 or 2, wherein the shells (220a, 220b) are identical and said plane (P1) is also a plane of symmetry.

4. The planet carrier (213) according to one of the preceding claims, wherein the tabs (294) are in axial support against each other and are axially clamped together by screws which extend parallel to said axis X and pass through passages (295) of these tabs.

5. The planet carrier (213) according to claim 4, wherein the connections between the cage carrier (222) and the cage (220) are of the ball joint type, said fingers (282) carrying ball joints (286) which are housed in rings (284) mounted in said first and second orifices (280a, 280b).

6. The planet carrier (213) according to claim 5, wherein a first nut (292) is screwed to an axial end of each of said fingers (282) and secures the ball joint (286) carried by that finger (282), and a second nut (297) is screwed to a free end of the ring (284) for mounting that ball joint (286) and secures that ring (284) to the shells (220a, 220b).

7. The planet carrier (213) according to one of claims 1 to 3, wherein the radial tabs (294) are axially spaced apart and wherein the connections between the cage carrier (222) and the cage (220) are of the ball joint type, said fingers (282) carrying rings (284) in which are housed ball joints (286) carried by inserts (298) mounted in said first and second orifices (280a, 280b).

8. The planet carrier (213) according to claim 7, wherein the connections between the cage carrier (222) and the cage (220) are of the ball joint type, said fingers (282) carrying ball joints (286) which are housed in rings (284) carried by inserts (298) mounted in said first and second orifices (280a, 280b).

9. The planet carrier (213) according to claim 7 or 8, wherein said inserts (298) are shrunk into said first and second orifices (280a, 280b).

10. The planet carrier (213) according to claim 5, 6, 7, 8 or 9, wherein each of said ball joints (286) has a major axis (Z, W) which is axially oriented and parallel to axis X or which is radially oriented relative to axis X.

11. A mechanical reduction gear (210) for an aircraft turbomachine, comprising a planet carrier (213) according to one of the preceding claims, a sun gear (11) mounted in said cavity (221) and centred on said axis X, a ring gear (14) extending around the sun gear (221), and planet gears (12) mounted in said cavity (221) and meshed with the sun gear (11) and the ring gear (14)

12. A turbomachine (1), in particular of an aircraft, comprising a reduction gear (210) according to the preceding claim.
